# EUROPEAN PATENT APPLICATION

(11) **EP 1 595 680 A1**
(43) Date of publication of application: **16.11.2005**
(21) Application number: 03774199.8
(22) Date of filing: 25.11.2003
(51) Int. Cl.: B29C 45/54, B29C 45/62

(54) **INJECTION MOLDING MACHINE**

(30) Priority: 26.11.2002 JP 2002341899
(71) Applicant: Sanjo Seiki Co., Ltd, Kawaguchi-shi, Saitama 332-0032 (JP); Nishizawa, Toshimichi, Yokosuka-shi, Kanagawa 239-0844 (JP)
(72) Inventor: NISHIZAWA, Toshimichi, Yokosuka-shi, Kanagawa 239-0844 (JP)
(74) Representative: W.P. Thompson & Co.
(86) International application number: PCT/JP2003/014990
(87) International publication number: WO 2004/048069

(57) **Abstract**

An injection molding machine, wherein an injection pot (34) with an injection nozzle (33) and a side casting port (35) for casing a material into the pot are formed in a metal case (31), the tip part (37) of a plunger (36) disposed in the pot is formed in such a shape that the tip part (32) of the injection pot can be generally filled with the material when an injection is completed, a fitting part (38) pressingly cutting off a formed material by allowing a boundary part between a plunger body part (34a) and the tip part (37) to be fitted thereto is formed at a boundary part between an injection pot body part (34a) and the tip part (32), and when tip part of the plunger is inserted into the tip part of the injection pot, a clearance S is formed between the tip part (37) of the plunger and the tip part (32) of the injection pot and the casting port (35) is opened to the fitting part (38), whereby the injection molding machine capable of performing the assured pressing cutting off and excellent injection, of plastic rubber in the injection pot and effective removal of residual rubber with less number of times of injection and providing an efficient production efficiency and an excellent strength can be provided.

## Description

### TECHNICAL FIELD

The present invention relates to an improvement of an injection molding machine, and particularly relates to an improvement of an injection molding machine of a pre-pla(pre-plasticizing) type suitable for injection molding of rubber.

### BACKGROUND

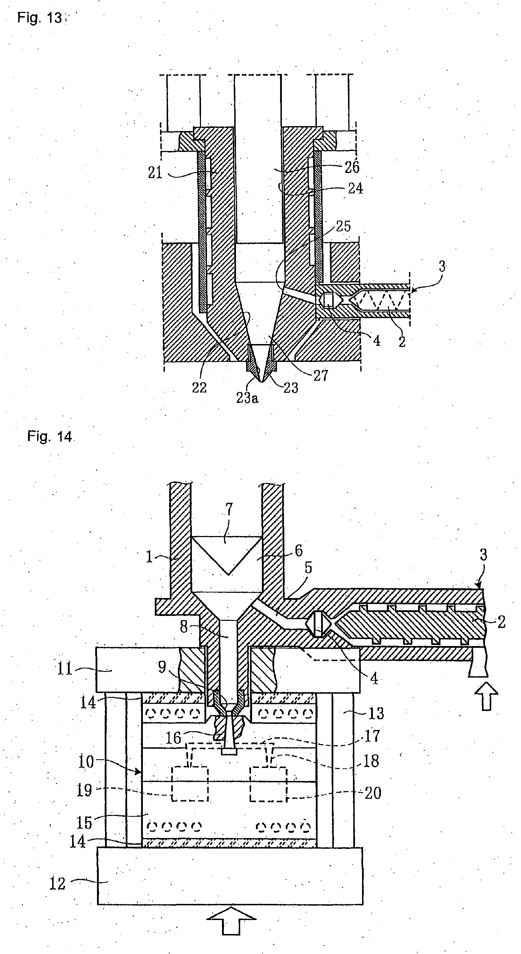

As the pre-pla type injection molding machine, there is one shown in Fig. 14. This machine is constituted of an extruding machine 3 provided with a screw 2 and having a plasticizing and feeding function while measuring, an injection pot 6 inside of the metal barrel 1 coupled to the extruding machine 3 via a passage 5 with a check valve 4, a plunger 7 reciprocating in the injection pot 6, a part 8 positioned at a tip of the pot 6 and serving as an injection passage (hereinafter, "a tip part of the injection pot"), and an injection nozzle 9 provided at a tip of the tip part 8 of the injection pot inside a metal barrel 1, where a lower portion of the metal barrel 1 portioned near its lower end is supported by an upper die plate 11 on a mold 10. Here, reference numeral 12 denotes a lower die plate coupled by the upper die plate 11 and tie bars 13, reference numeral 14 denotes an insulating plate, and reference numeral 15 denotes a lower mold also serving as a heater plate.

In the injection molding machine, first, raw rubber is supplized into the extruding machine 3 like an arrow shown in Fig. 14, it is plasticized, while being fed to the left in Fig. 14 by the screw 2, such plasticized rubber is fed into the injection pot 6 by the passage 5 via the check valve 4, while measuring, and the plunger 7 is elevated by a feeding pressure of plasticized rubber. Next, by pushing down the plunger 7, plasticized rubber inside the injection pot 6 is fed into the die 10 via the tip part 8 of the injection pot and the nozzle 9 and injected into cavities 19, 20 in the mold 10 via a sprue 16, a runner 17, and a gate 18, where curing is conducted.

In order to improve production efficiency of cured rubber product, and reduce product cost, it is effective to reduce a curing time for plasticized rubber filled in the cavities 19, 20, for which a temperature of the rubber in the injection pot 6 is required to be set as high as possible. However, when the temperature of plasticized rubber in the injection pot 6 is made excessively high, scorching, namely, "an initial stage where a curing reaction starts so that flowmability is lost" occurs easily, so that scorched rubber advances into the cavities 19, 20, which may result in product failure or clogging at the tip part 8 of the injection pot or the nozzle 9.

Control of plasticized rubber temperature is important for avoiding the above circumstances. In this context, as shown in Fig. 14, an injection molding machine where plasticized rubber is fed into the same pot 6 from a side part of the injection pot 6 via the passage 5 after being plasticized and metered within the extruding machine 3 is convenient, because a rubber temperature after heat generation due to the plasticization in the extruding machine 3 and a heat-retention temperature inside the injection pot 6 can be controlled independently.

Incidentally, in an injection molding machine where a screw extruding machine is built in a plunger like an injection molding machine disclosed in Japanese Patent No. 3174346 described later, rubber temperature after heat generation inside the screw extruding machine and a set heat-retention temperature in the extruding machine inside an injection pot influence each other, which results in difficulty in control of the both temperatures in a separating manner from each other. Like a commercially-available injection molding machine of one kind, one where a plasticized material from an extruding machine is fed into the pot from a nozzle at a tip part of an injection pot requires much time for feeding a plasticized material into the injection pot, when injection heat generation due to small diameter of the nozzle is tried to be utilized for reducing a curing time.

In the machine shown in Fig. 14, since generation of the scorched rubber is further accelerated when rubber adhered to an inner wall face such as that of the injection pot 6 remains at that place for a long time, it is desirable to reduce the number of times of injection required for replacing plasticizing rubber present in the injection pot 6 by fresh fed plasticizing rubber completely as much as possible to shorten the staying time of rubber adhered to the inner wall face in order to suppress generation of scorched rubber.

That is, it is desirable that rubber at the staying portion is injected completely by the number of times of injection reduced as less as possible to be replaced by fresh plasticizing rubber, but when the replacing performance is poor, the number of times of injection is increased. Especially, when the temperature in the injection pot 6 is elevated, scorching occurs easily. On the contrary, when the replacing performance is excellent, the number of times of injection can be reduced, and a time in which plasticizing rubber is overheated on the inner wall face is shortened. As a result, generation of scorch can be suppressed.

In the general injection molding machine shown in Fig. 14, since the tip part 8 of the injection pot has the same diameter over its entire length, and a flowing velocity of plasticizing rubber is considerably reduced at its inner wall face as compared with its central part at a time of injection, plasticizing rubber tends to remain like cholesterol when an injection is completed. Therefore, in order to remove residual rubber from the tip part 8 of the injection pot as preparation for replacement by fresh plasticizing rubber, considerably many times (at least six times) of injection have to be repeated.

When the residual rubber accumulates at the tip part 8 of the injection pot in a time elapsing manner so that an inner diameter (flow diameter) of the passage 8 becomes small, removal cannot be achieved yet by the repetition of injection. Accordingly, residual rubber is generally removed, for example, by detaching the barrel 1 from the upper die plate 11 to clean the tip part 8 of the injection pot, the injection nozzle 9, and the like for each predetermined number of times of injection obtained experimentally, which requires much time and labor and causes increase in cost.

In order to solve this problem, there is an idea that by gradually reducing a diameter of the tip part of an injection pot toward a nozzle and setting an inclination angle of an inner wall face of the tip part of the injection pot relative to an axial line of the injection pot to 0.2° or more in a section including the axis, like an injection molding machine described in Japanese Patent Application Laid-open No. H10-166403, a flow rate distribution of plasticizing rubber at a time of injection is changed to improve a flow rate at the inner wall part of the tip part of the injection pot and to prevent the residue of plasticizing rubber at a time of injection completion. However, when clogging once occurs in the shape shown in the above application, the problem about the clogging cannot be solved by such a repetition of injection. Therefore, clogged rubber has to be taken out by disassembling the injection molding machine or part replacement has to be conducted, so that time and cost therefor are further increased as compared with the above-described case.

Briefly, in the conventional common injection molding machine, since plasticizing rubber tends to easily remain on the inner wall face in the tip part of the injection pot or the like structurally, the number of times of injection for the replacement is increased beyond necessity. Besides, when the residual rubber cannot be removed even by injections for replacements, it is necessary to detach the barrel to perform cleaning, so that time and cost therefor are significant. Further, in the injection molding machine that the tip part of the injection pot is gradually reduced toward the nozzle, which is described in the above application, when clogging once occurs in the passage, disassembling of the injection molding machine, part replacement therein or the like is also required, which results in occurrence of such a problem that, since a rubber temperature within the injection pot cannot be set to a high temperature within a range in which scorching does not occur, so that an improvement in production efficiency and reduction in product cost cannot be achieved.

In view of these circumstances, the present inventor previously made an invention dislosed in Japanese Patent Application Laid-open No. 2001-237148. That is, the invention is, as a main object, to be capable of removing the residual rubber effectively without cleaning or disassembling the machine while reducing the number of times of injection for replacing the residual rubber as less as possible, and it is directed to an injection molding machine where an injection pot provided with an injection nozzle and a feeding port for supplying a formed material put in a plasticing state into the pot are formed in the barrel and a plunger is slidably disposed in the injection pot, where a tip part of the plunger is formed in such a shape as to fill in a tip part of the injection pot at a time of injecting a formed material.

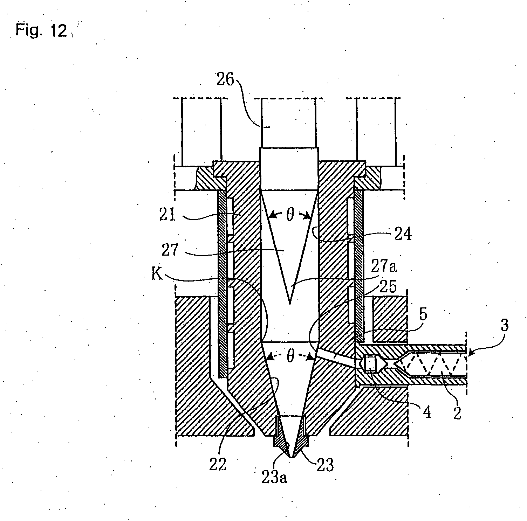

Specifically, for example, as shown in Figs. 12 and 13, a tip part 22 of an injection pot in a barrel 21 is formed in a shape with a tapered section directly from a lower end of an injection pot 24 body part, an inner face of an injection nozzle 23 is also formed in an inner wall 23a with a tapered section continuous to the tip part 22 of the injection pot, and a tip part 27 of a plunger 26 is formed to conform with the shapes of the tip part 22 of the injection pot and the inner wall 23a of the injection nozzle 23. An angle θ of the taper is determined depending on a diameter of the injection pot 24 determined according to a size of the injection molding machine, a thickness of an upper die plate 11, and a position of an extruding machine 3 mounted on the barrel 21. The taper angle θ is set to 30° in the illustrated example.

According to the above constitution, plasticizing rubber fed into the injection pot 24 from a feeding port 25 via a passage 5 by the extruding machine 3 is pressed into the tip part 22 of the injection pot by descending of the plunger 26 to be forced into cavities 19, 20 in a mold 10 via the nozzle 23 and cured. After a predetermined_descending of the plunger 26, a tip part 27 thereof advances into the tip part 22 of the injection pot so that the plunger 26 descends while continuously injecting rubber from the injection nozzle 23. At that time, a flow rate on the inner wall face becomes large owing to the shape of the tip part 22 of the injection pot so that rubber on the wall face flows down without delay. Since the tip portion 22 of the injection pot is formed in a tapered shape, near a connecting point K between the tip part 22 of the injection pot and the injection pot 24 approaches to a straight line, and constitutes an obtuse angle. Therefore, flowing-down of the rubber is conducted smoothly, so that the possibility of an occurrence of scorching is reduced.

When the lower end of the body part of the plunger 26 reaches a lower end of the injection pot 24, as shown in Fig. 13, the entire tip part 27 fits into the tip part 22 of the injection pot and its projection end 27a abuts on the inner wall 23a of the injection nozzle 23. Accordingly, there is hardly any residue of rubber in the tip part 22 of the injection pot and the injection nozzle 23 in this example, so that it is unnecessary to repeat injection many times in order to remove residual rubber from the tip part 22 of the injection pot or the like as preparation for replacement by fresh plasticized rubber.

According to a research performed by the present invention thereafter, it has been found that it is important to form a fitting part pressingly cutting off a formed material put in a plasticized state by allowing a boundary part between a plunger body part and the tip part to be fitted thereto at a boundary part (the K point (Fig.12)or a pot diameter-reduced part) between the injection pot body part and the tip part in order to prevent rubber in the tip part 22 of the injection pot and the injection nozzle 23 from remaining. If such a fitting part can be formed, even if such a constitution is not employed that the tip part 27 of the plunger 26 is completely fitted into the tip part 22 of the injection pot to cause the projection end 27a to abut on the inner wall 23a of the injection nozzle 23, namely, even if a clearance in an extend described latter is formed between the tip part 22 of the injection pot and the inner wall 23a of the injection nozzle 23, residue of rubber can be prevented stopped sufficiently.

The present inventor has also found that ascending of the plunger 26 is facilitated by providing the clearance and ascending of the plunger 26 can be made possible by only supplying a plasticized material from the feeding port 7 to make a formed material in the barrel1.

Furthermore, the present inventor has found the following matters: (1) "replacing performance" in a passage "c" between an injection pot "a" and a nozzle "b" in Fig. 5 is largely related to an angle θ of the passage according to experiment (see Fig. 6), where, for example, when the angle θ is 3°, the number of times of injection for replacement has to be 10 times, but when the angle θ is 10°, the number is 3 times, and when the angle θ is 60°, the number is 1 time. Accordingly, the angle θ of 10° or larger is sufficient and cholesterol-like scorching can be practically prevented from occurring; (2) a strength of a tip part wall a' of the injection pot "a" decreases according to increase in tip part angle θ of the injection pot "a" in structures shown in Figs. 7, 8 and Fig. 9, but it is understood from Fig. 9 that there is a branching point of deformation near a tip part angle of 40° and it is preferable in view of strength that the tip part angle θ is equal to or less than 40°. Accordingly, it is found from the above matters (1) and (2) that a tip part angle θ of the injection pot in a range of 10° to 40° is prefesable.

Accordingly, an object of the present invention is to provide an injection molding machine capable of performing a thermal control securely, assuring pressing cutting-off of plasticized rubber inside an injection pot and performing excellent injection, and performing effective removal of residual rubber in the injection pot with less number of times of injection.

An object of the present invention is to provide an injection molding machine which can facilitate ascending of a plunger, thereby providing efficient production efficiency and an excellent strength.

### DISCLOSURE OF THE INVENTION

The present invention provides an injection molding machine wherein an injection pot provided with an injection nozzle and a feeding port for supplying a plasticized material put in a plasticized state from a side part into the pot are formed in a barrel, a plunger is slidably disposed in the injection pot, a tip part of the plunger is formed in such as shape that a tip part of the injection pot can be generally filled with the material when an injection of a formed material is completed, a fitting part pressingly cutting off the formed material put in a plasticized state by allowing a boundary part between a body part of the plunger and a tip part thereof to be fitted thereto is formed at a boundary part between a body part of the injection pot and the tip part thereof, and when the tip part of the plunger is inserted into the tip part of the injection pot so as to generally fill the tip part of the injection pot, a clearance is formed between the tip part of the plunger and the tip part of the injection pot in the fitting part or below and the feeding port is opened to the fitting part in the plunger. Thereby, an injection molding machine capable of performing thermal control securely by supplying a formed material put in a plasticized state from a side part to the injection pot, performing an assured pressing cutting off and excellent injection of plasticized rubber in the injection pot by forming the fitting part pressingly cutting off the formed material put in a plasticized state by a boundary part between a body part of the plunger and a tip part thereof at a boundary part between an injection port body part and the tip part thereof, performing effective removal of residual rubber in the injection pot with less number of times of injection in a combination with such a constitution that the tip part of the plunger is formed in such as shape that the tip part of the injection pot can be generally filled with the material when an injection of a formed material is completed, and providing an efficient production and an excellent strength can be provided.

### BRIEF DESCRIPTION OF THE DRAWINGS

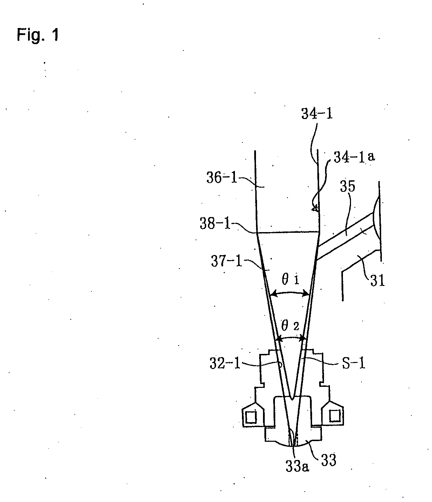

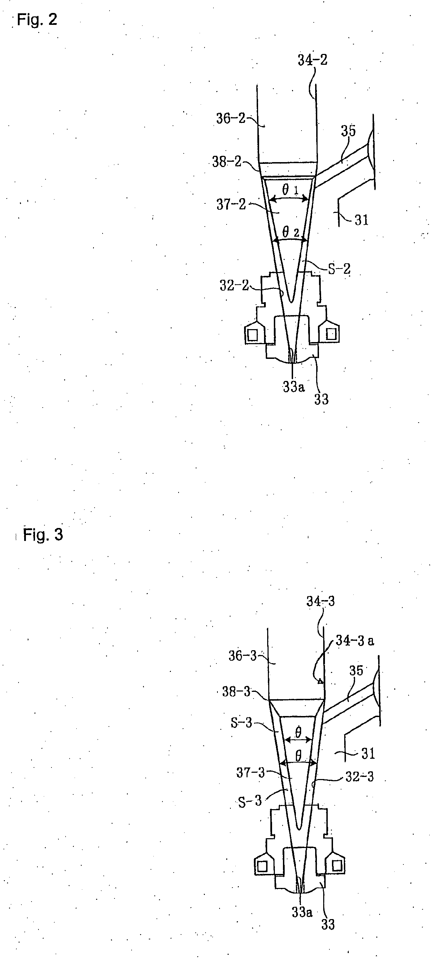

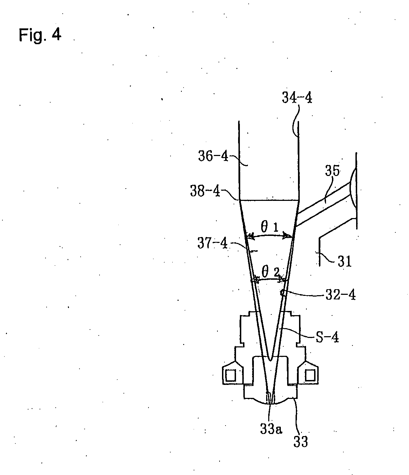

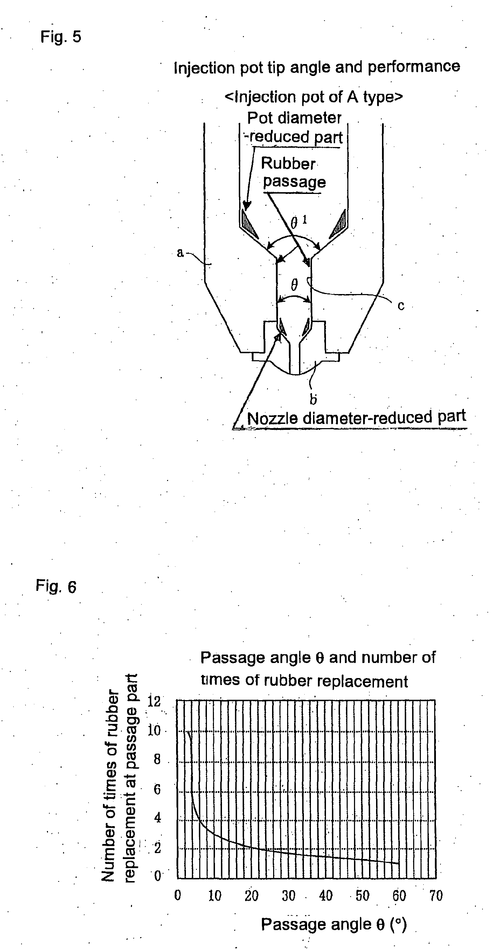

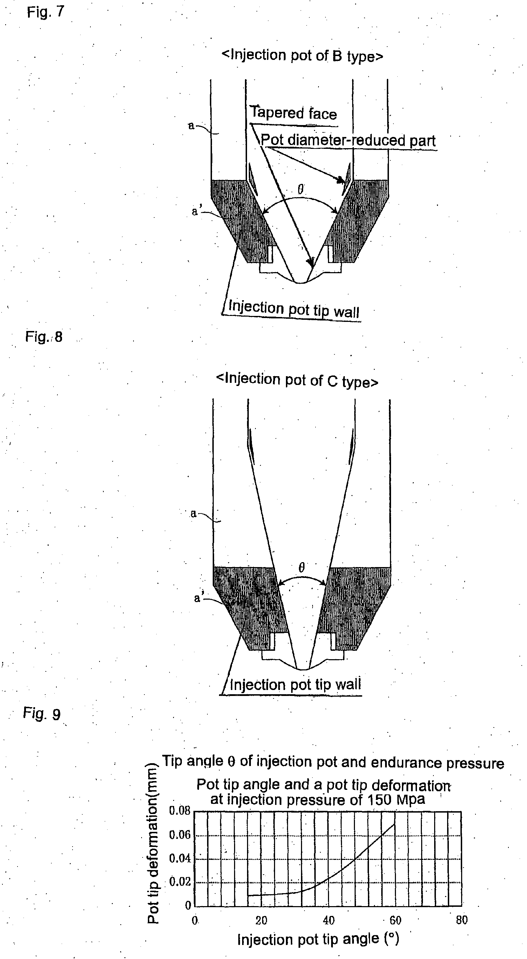

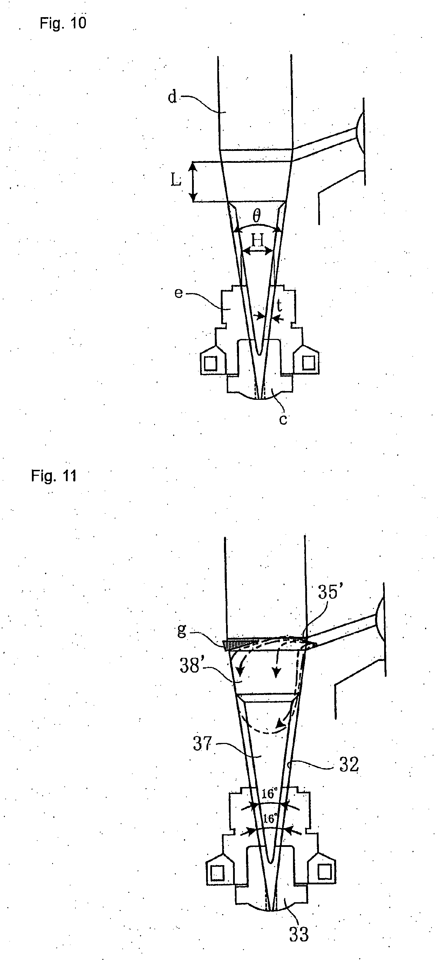

Fig. 1 is a sectional view of relevant parts of a first embodiment of an injection molding machine according to the present invention; Fig. 2 is a sectional view of relevant parts of a second embodiment of an injection molding machine according to the present invention; Fig. 3 is a sectional view of relevant parts of a third embodiment of an injection molding machine according to the present invention; Fig. 4 is a sectional view of relevant parts of a fourth embodiment of an injection molding machine according to the present invention; Fig. 5 is a sectional view showing one example of relevant parts of an injection molding machine, for explaining a tip part angle of an injection pot and its performance; Fig. 6 is a correlation diagram between a tip part passage angle of an injection port and the number of times of rubber replacement; Fig. 7 is a sectional view showing another example of relevant parts an injection molding machine, for explaining a tip part angle of an injection pot and its performance; Fig. 8 is a sectional view showing still another example of relevant parts of an injection molding machine, for explaining a tip part angle of an injection pot and its performance; Fig. 9 is a correlation diagram between a tip part passage angle of an injection pot and a endurance pressure; Fig. 10 is a sectional view showing one example of relevant parts of an injection molding machine, for explaining a clearance between an injection pot and a plunger; Fig. 11 is a sectional view of one example of relevant parts of an injection molding machine showing an effect of a position of a feeding port for a formed material; Fig. 12 is a sectional view of relevant parts of an embodiment of an injection molding machine according to a prior application before a plunger actuation; Fig. 13 is a sectional view of the relevant parts of the embodiment of the injection molding machine according to the prior application after plunger actuation; and Fig. 14 is a sectional view showing a conventional injection molding machine and a mold.

### BEST MODE FOR CARRYING OUT THE INVENTION

The present invention will be further explained with reference to Figs. 1 to 4 among the accompanying drawings.

In an injection molding machine of the present invention, an injection pot 34 provided with an injection nozzle 33 and a feding port 35 for supplying a formed material put in a plasticized state from a side part into the injection pot 34 are formed in a barrel 31, a plunger 36 is slidably disposed in the injection pot 34, a tip part 37 of the plunger 36 is formed in such as shape that a tip part 32 of the injection pot can be generally filled with the material when an injection of a formed material is completed, a fitting part 38 pressingly cutting off the formed material put in a plasticized state by allowing a boundary part between a body part 34a of the plunger and a tip part 37 thereof to be fitted thereto is formed at a boundary part between a body part 34a of the injection pot and the tip part 32 thereof, and when the tip part 37 of the plunger is inserted into the tip part 32 of the injection pot so as to generally fill the tip part 32 of the injection pot, a clearance S is formed between the tip part 37 of the plunger and the tip part 32 of the injection pot in the fitting part 38 or below and the feeding port 35 is opened to the fitting part 38 of the plunger 36.

Explaining an embodiment further in detail, in an embodiment shown in Fig. 1, first, a tip part 32-1 of the injection pot is directly formed from a lower end of a body part 34-1 a of an injection pot 34-1 so as to have a tapered section, an inner face of an injection nozzle 33 is also formed to have an inner wall 33a with a tapered section continuous to the tip part 32-1 of the injection pot, and a shape of a tip part 37-1 of a plunger 36-1 is formed in a tapered shape similar to those of the tip part 32-1 of the injection pot and the inner wall 33a of the injection nozzle 33, where a taper angle θ1 of the tip part 37-1 of the plunger 36-1 is larger than an angle θ2 of the tip part 32-2 of an injection pot, and a clearance S-1 is formed below the fitting part 38-1, as shown in Fig. 1.

The clearance S-1 is determined according to an experiment or the like such that a remaining amount of a formed material does not constitute an obstacle as scorch after the formed material is injected out from the tip part 32-1 of the injection pot and ascending of the plunger 36-1 can be performed easily. The angle θ of the taper is determined according to a diameter of the injection pot 34-1 determined depending on a size of the injection molding machine, a thickness of the upper die plate 11, and a position of an extruding machine 3 mounted on the barrel 31.

With the above constitution, when the plunger 36-1 is ascended while a formed material is being fed into the feeding port 35 or before feeding, the ascending can be performed easily. Besides, even when the formed material is injected out from the injection pot tip part 32-1 by pushing down the ascended plunger 36-1, the boundary part between the body part 34-1a of the injection pot 34-1 and the tip part 32-1 abuts on the fitting part 38-1 of the plunger 36-2 to pressingly cut off the material extruded. Accordingly, the formed material hardly remains as scorch.

In an embodiment shown in Fig. 2, a tip part 32-2 of an injection pot is formed to have a slightly narrow tapered section from the lower end of a body part 34-2a of an injection pot 34-2 via an annular fitting part 38-2, an inner face of the injection nozzle 33 is also formed to have an inner wall 33a with a tapered section continuous to the tip part 32-2 of the injection pot, and a shape of a tip part 37-2 of a plunger 36-2 is formed in a tapered shape similar to those of the tip part 32-2 of the injection pot and the inner wall 33a of the nozzle 33, where a taper angle θ1 of the tip part 37-2 of the plunger 36-2 is larger than an angle θ2 of the tip part 32-2 of the injection pot, and a clearance S-2 is formed below the fitting part 38-2, as shown in Fig. 2.

The clearance S-2 is determined according to an experiment or the like such that a remaining amount of a formed material does not constitute an obstacle as scorch after the formed material is injected out from the tip part 32-2 of the injection pot and ascending of the plunger 36-2 can be performed easily. The angle θ of the taper is determined according to a diameter of the injection pot 34-2 determined depending on a size of the injection molding machine, a thickness of the upper die plate 11, and a position of an extruding machine 3 mounted on the barrel 31.

With the above constitution, when the plunger 36-2 is ascended while a formed material is being fed into the feeding port 35 or before feeding, the ascending can be performed easily. Besides, even when the formed material is injected out from the tip part 32-2 of the injection pot by pushing down the ascended plunger 36-2, the boundary part between the body part 34-2a of the injection pot 34-2 and the tip part 32-2 abuts on the fitting part 38-2 of the plunger 36-2 to pressingly cut off the material extruded. Accordingly, the formed material hardly remains as scorch.

In an embodiment shown in Fig. 3, a tip part 32-3 of an injection pot is formed to have a slightly narrow tapered section from the lower end of a body part 34-1a of the injection pot 34-3 via a slightly large annular fitting part 38-3, an inner face of the nozzle 33 is also formed to have an inner wall 33a with a tapered section continuous to the injection pot tip part 32-3, and a shape of a tip part 37-3 of a plunger 36-3 is formed in a tapered shape similar to those of the tip part 32-3 of the injection pot and the inner wall 33a of the injection nozzle 33, where a taper angle of the tip part 37-3 of the plunger 36-3 and an angle of the tip part 32-3 of the injection pot is set to the same angle θ, and a clearance S-3 is formed below the fitting part 38-3, as shown in Fig. 3.

The clearance S-3 is determined according to an experiment or the like such that a remaining amount of a formed material does not constitute an obstacle as scorch after the formed material is injected out from the tip part 32-3 of the injection pot and ascending of the plunger 36-3 can be performed easily. The angle θ of the taper is determined according to a diameter of the injection pot 34-3 determined depending on a size of the injection molding machine, a thickness of the upper die plate 11, and a position of an extruding machine 3 mounted on the barrel 31.

With the above constitution, when the plunger 36-3 is ascended while a formed material is being fed into the feeding port 35 or before feeding, the ascending can be performed easily. Besides, when the formed material is injected out from the tip part 32-3 of the injection pot by pushing down the ascended plunger 36-3, the boundary part between the body part 34-3a of the injection pot 34-3 and the tip part 32-3 abuts on the fitting part 38-3 of the plunger 36-3 to pressingly cut off the material extruded. Accordingly, the formed material hardly remains as scorch.

In an embodiment shown in Fig. 4, a tip part 32-4 of an injection pot is formed to have a tapered section from the lower end of a body part 34-4a of an injection pot 34-4 via an oblique annular fitting part 38-4, an inner face of the injection nozzle 33 is also formed to have an inner wall 33a with a tapered section continuous to the tip part 32-4 of the injection pot, and a shape of a tip part 37-4 of a plunger 36-4 is formed in a tapered shape similar to those of the injection pot tip part 32-4 and the inner wall 33a of the injection nozzle 33, where a taper angle θ1 of the tip part 37-4 of the plunger 36-4 is set to be larger than an angle θ2 of the tip part 32- 4 of the injection pot, and a clearance S-4 is formed below the fitting part 38-4, as shown in Fig. 4.

The clearance S-4 is determined according to an experiment or the like such that a remaining amount of a formed material does not constitute an obstacle as scorch after the formed material is fed out from the tip part 32-4 of the injection pot and ascending of the plunger 36-4 can be performed easily. The angle θ of the taper is determined according to a diameter of the injection pot 34-5 determined depending on a size of the injection molding machine, a thickness of the upper die plate 11, and a position of an extruding machine 3 mounted on the barrel 31.

With the above constitution, when the plunger 36-4 is ascended while a formed material is being fed into the feeding port 35 or before feeding, the ascending can be performed easily. Besides, even when the formed material is injected out from the tip part 32-4 of the injection pot by pushing down the ascended plunger 36-4, the boundary part between the body part 34-4a of the injection pot 34-4 and the tip part 32-4 abuts on the fitting part 38-4 of the plunger 36-4 to pressingly cut off the material extruded. Accordingly, the formed material hardly remains as scorch.

Regarding the clearances S-1 to S-4, consideration is also made from the following viewpoint found by the inventor. That is, in Fig. 10, when it is assumed that the length of a fitting part of a plunger d is represented as L, an injection pot tip part angle is represented as θ, an uppermost opening diameter of a nozzle holder (which also serves as a tool for forming a vicinity of a tip of the injection pot) "e" is represented as H, and a clearance between the plunger and the injection pot is represented as t, it is required to satisfy an equation t ≤ H/2, namely, the clearance t is required to be equal to or less than 1/2 of the opening diameter H. This is because such a thickness is required that, when rubber has been cured in the clearance t, cured rubber can be taken out after the nozzle c or the nozzle holder e is detached.

By setting the position of the feeding port for a formed material in the barrel 31 at least above an upper end of the fitting part, as shown with reference numeral 35' in Fig. 11, a formed material expands from a generally upper edge of the fitting part 38' downward, as shown with a double-dotted chain line. Accordingly, after inserting the plunger tip 37 into the injection pot tip end 32 to inject rubber from the nozzle 33, rubber remaining in the injection pot tip 32 becomes small as shown with "g", which facilitates replacement.

### Industrial Applicability

As described above, the injection molding machine according to the present invention can provide an injection molding machine capable of performing thermal control securely, especially for injection molding for rubber, performing an assured pressing cutting off and excellent injection of plasticized rubber in an injection pot, and performing effective removal of residual rubber in the injection pot with less number of times of injection, and it is suitable to provide an injection molding machine capable of performing ascending of a plunger easily, thereby, providing an efficient production efficiency and an excellent strength.

## Claims

1. An injection molding machine wherein an injection pot provided with an injection nozzle and a feeding port for supplying a formed material put in a plasticized state from a side part into the pot are formed in a barrel, a plunger is slidably disposed in the injection pot, a tip part of the plunger is formed in such as shape that a tip part of the injection pot can be generally filled with the material when an injection of a formed material is completed, a fitting part pressingly cutting off the formed material put in a plasticized state by allowing a boundary part between a body part of the plunger and a tip part thereof to be fitted thereto is formed at a boundary part between a body part of the injection pot and the tip part thereof, and when the tip part of the plunger is inserted into the tip part of the injection pot so as to generally fill the tip part of the injection pot, a clearance is formed between the tip part of the plunger and the tip part of the injection pot in the fitting part or below and the feeding port is opened to the fitting part in the plunger.

2. The injection molding machine according to claim 1, wherein the fitting part is formed annular line.

3. The injection molding machine according to claim 1, wherein the fitting part is formed in a ring shape with a width.

4. The injection molding machine according to claim 1, 2, or 3, wherein the feeding port is provided at least above the fitting part.
